# EUROPEAN PATENT SPECIFICATION

(11) **EP 1 285 410 B1**
(45) Date of publication and mention of the grant of the patent: **28.12.2005**
(21) Application number: 01932405.2
(22) Date of filing: 17.05.2001
(51) Int. Cl.: G07F 5/18

(54) **DEVICE FOR DETECTING THE PRESENCE OF ARTICLES**
VORRICHTUNG ZUM ERFASSEN DER ANWESENHEIT VON GEGENSTÄNDEN
DISPOSITIF PERMETTANT DE DETECTER LA PRESENCE D'ARTICLES

(30) Priority: 19.05.2000 NL 1015253
(43) Date of publication of application: 26.02.2003
(73) Proprietor: FRI-JADO B.V., NL-4878 AA Etten-Leur (NL)
(72) Inventor: VAN DER WEIJDEN, Engel, NL-4847 JA Teteringen (NL); VOLLAARD, Peter, NL-4715 GJ Rucphen (NL); BOELSMA, Rob, NL-1991 BH Velserbroek (NL)
(74) Representative: Eveleens Maarse, Pieter
(86) International application number: PCT/NL2001/000376
(87) International publication number: WO 2001/091067

(56) References cited:
- EP-A- 0 249 509
- EP-A- 0 249 974
- EP-A- 0 340 420
- GB-A- 1 536 533
- GB-A- 2 307 560
- US-A- 3 611 358
- US-A- 4 366 463

## Description

The invention relates to a device for detecting the presence of articles in a cabinet, comprising:
- means (14) for determining a location for each of the articles in the cabinet; and
- a detector arranged at each location for detecting the presence of an article at the relevant location, wherein the detector is adapted to react to the displacement of a part of the detector caused by the force of gravity,
- wherein each detector comprises a magnet (11) and an element (16) reacting to a change in the magnetic field caused by the magnet,
characterized in that each of the magnets is fixed on a spring (10) which is pressed downward by an article placed in the location,
- that a cover plate (7) is placed above the element,
- that recesses (8) are made in the cover plate at each of the locations, and
- that in each recess (8) is arranged a cap (9) which is manufactured from flexible material and which is connected to the cover plate and which extends over the magnet (11) and the spring (10).

A device according to the preamble of the main claim is known from GB-A-1 536 533.

Other prior art device is known from EP-A-0 340 420.

In this known device micro-switches are applied.

These micro-switches have the drawback of being susceptible to wear and of being sensitive to moisture.

Experience has shown that such presence detector circuits are used mainly, though not exclusively, in the catering industry, wherein they form part of an integrated payment and administrative system and wherein the removal of an article, for instance a bottled drink to be served, is detected by the presence detector and transmitted to a recording device.

Such a device must be cleaned regularly, wherein a large amount of water is usually used and whereby moisture can affect the operation of the switch. Furthermore, it sometimes occurs that a bottle breaks and that the detector comes into contact with liquid, in particular sugary liquid, thereby causing malfunction of the detector.

The object of the present invention is to provide such a device, wherein detectors are applied which are less sensitive to water and which have a longer lifespan.

This objective is achieved by the characterising features of the main claim.

Solid-state detectors are not susceptible to wear, or hardly so, while being equally insensitive to moisture.

It could be possible in principle to embody the detector with a light source and a light-sensitive element. Although the sensitivity of such detectors to fouling and water is considerably better than that of detectors provided with switches, they suffer from the drawback that the light path can be affected by fouling, while it is moreover possible that the light source fails and has to be replaced.

Therefore the detector according to the present invention comprises a magnet and an element reacting to a change in the magnetic field caused by the magnet.

This is a type of detector which is wholly insensitive to dirt and moisture.

According to a preferred embodiment the element reacting to the magnetic field is a Hall element.

Hall elements are small and have a low energy consumption.

According to the present invention the magnet is fixed on a spring which is pressed downward by an article placed in the position. This is found to be an attractive switching configuration.

The Hall element according to a preferred embodiment is preferably fixedly mounted on a printed circuit board which extends over all detectors located in a surface. This is an attractive manner of preventing connection problems; the Hall elements are each placed on a printed circuit board in a matrix configuration and connected by means of the wiring present on the printed circuit board to a connector or the like.

According to the present invention a cover plate is placed above the element, recesses are made in the cover plate at the location of the positions at which the articles must be placed, and in each recess is arranged a cap manufactured from flexible material which is connected to the cover plate and which extends over the magnet and the spring. An additional protection of the switch elements is obtained with this configuration, while this moreover results in an exceptionally simple, operationally reliable and inexpensive solution.

According to yet another preferred embodiment the magnet is received in the cap. This avoids the presence of further structural elements.

According to a particularly advantageous embodiment the spring is connected clampingly on its top side to the cap. This also obviates further structural elements.

According to a new preferred embodiment a vapour-tight layer is arranged between the printed circuit board and the cap.

An additional protection against moisture is obtained with this measure.

When the vapour-tight layer comprises a rigid plate, a sturdy base is created for the bottles; the upper, thin plate could after all easily sag.

As already stated above, the present device is particularly applicable in the catering industry. It is therefore recommended that the space be formed by a closable space to be opened by a key, that the articles be formed by bottles and that the detectors be connected to the recording device.

Other attractive preferred embodiments are stated in the remaining claims.

The invention will be elucidated hereinbelow with reference to the annexed drawings, in which:
figure 1 shows a perspective view of an opened cabinet in which the device according to the present invention is applied; and

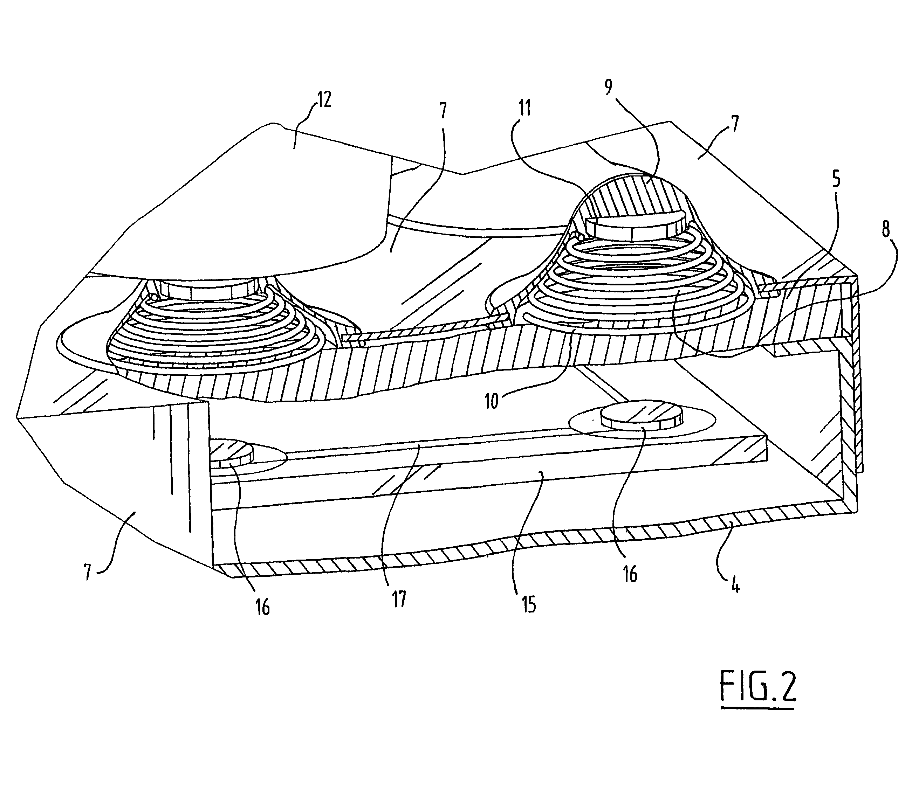

figure 2 is a cut-away detail view of the device shown in figure 1.

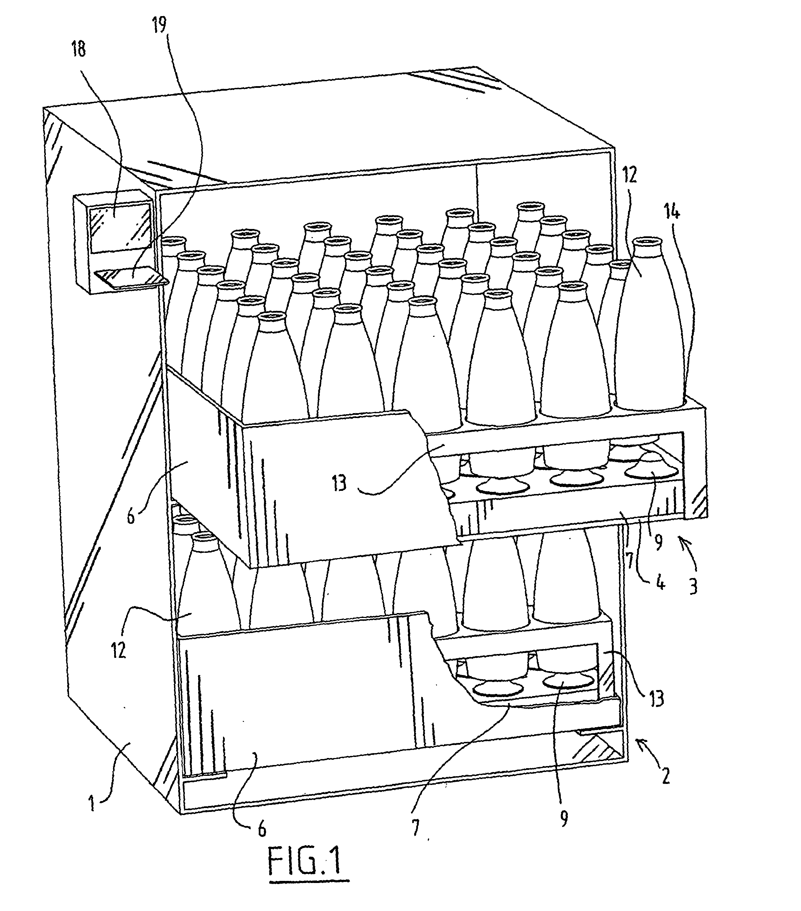

Figure 1 shows a cabinet 1 in which are arranged two drawers 6. An insert 3 is placed in each of the drawers 6. Cabinet 1 can be closed on its front side by a door which is not shown in the drawing. In addition, the cabinet is preferably formed by a refrigerator for cooled storage of the content of the cabinet.

Each of the inserts 2,3 is formed by a metal plate 4 which is bent on its sides and which thus forms a tray. A plate 5 manufactured for instance from plastic or wood is arranged on top of this tray 4.

A cover plate 7 is arranged above plate 5. Cover plate 7 is preferably manufactured from metal and extends over the whole surface of plate 4, wherein plate 7 is likewise bent at its edges so that together with plate 4 a box is formed.

Plate 7 is provided with openings 8 ordered in a matrix. A hat-shaped element 9 manufactured from flexible plastic is arranged in each of the openings 8. Hat-shaped element 9 is fixed clampingly round the edges of the relevant opening 8 and can be further connected to plate 7 by vulcanizing or glueing. This is however not essential.

A spiral spring 10 is arranged inside hat-shaped element 9. This spiral spring 10 rests with its underside on plate 5 which is provided with an opening 6 smaller than the openings 9 in plate 7. On its upper side the spiral 10 is connected by a clamping connection to hat-shaped element 9. Further arranged in the top of hat element 9 is a cavity which is filled by a permanent magnet 11. Spiral spring 10 is dimensioned such that when an article, for instance a bottle 12, is placed on hat-shaped element 9 the top of hat-shaped element 9 is pressed downward. The permanent magnet 11 herein moves downward.

Because bottles 12 must be supported not only on their underside but also on their sides, there is arranged above plate 7 a frame 13 in which an opening 14 is arranged at the position of each of the hat-shaped elements. Openings 14 thus form the positioning means for the bottles.

In order to detect the presence of a bottle 12 a printed circuit board 15 is arranged extending over the whole surface of the drawer. The printed circuit board is provided with a Hall element 16 at the position of each of the magnets 9. Print tracks 17 are arranged on printed circuit board 15 to connect each of the Hall elements 16 to for instance a connector not shown in the drawing.

The connector is then connected to a plug which is connected in turn to a cable connected through the rear of the cabinet 1 to a computer not shown in the drawing.

As already stated in the preamble, such a device usually finds application in the catering industry, this for recording the consumption of drinks. In order to record which waiter or waitress has removed the ordered drink from the cabinet, use is made of a recording sensor 18 arranged on the side of cabinet 1. The waiter or waitress places his/her identification element 19, for instance a magnetic card, into recording sensor 18, whereby for instance the door (not shown) of cabinet 1 opens. The waiter or waitress can then remove the required ordered drink, wherein he/she can moreover enter on a keyboard for instance the table number of the group which has ordered the drink. He/she then closes the door and serving of the drink is recorded.

It will be apparent here that if a bottle position is occupied by a bottle, the weight of bottle 12 will press the permanent magnet 11 downward counter to the force of spring 10, whereby the permanent magnet 11 is urged into the vicinity of the Hall element 16. The Hall element detects this displacement of the permanent magnet; the Hall element will after all detect a much stronger magnetic field because the distance to the permanent magnet has become shorter, this being recorded in per se known manner by the computer forming part of the device.

When the bottle is taken away the permanent magnet 11 will move upward due to the action of spring 10, whereby the Hall element 16 will be subjected to a magnetic field of lesser magnitude. This is also transmitted, which will record the removal of an ordered drink.

It will be apparent that it is possible to depart from the construction shown here in numerous ways. It is thus possible for instance only to read the detectors when the door of cabinet 1 is closed; drawers 2,3 are then pushed in fully and are then connected galvanically by for instance a plug connection to a socket received in the rear wall.

It is further possible to apply a larger or smaller number of drawers and the door for closing the drawers can be omitted if the drawer fronts close the interior of the cabinet and if the lock acts on the drawers.

## Claims

1. Device for detecting the presence of articles in a cabinet (1), comprising:
- means (14) for determining a location for each of the articles in the cabinet; and
- a detector arranged at each location for detecting the presence of an article at the relevant location, wherein the detector is adapted to react to the displacement of a part of the detector caused by the force of gravity,
- wherein each detector comprises a magnet (11) and an element (16) reacting to a change in the magnetic field caused by the magnet,
**characterized in that** each of the magnets is fixed on a spring (10) which is pressed downward by an article placed in the location,
- that a cover plate (7) is placed above the element,
- that recesses (8) are made in the cover plate at each of the locations, and
- that in each recess (8) is arranged a cap (9) which is manufactured from flexible material and which is connected to the cover plate and which extends over the magnet (11) and the spring (10) .

2. Device as claimed in claim 1, **characterized in that** the magnet is received in the cap (9).

3. Device as claimed in claim 1 or 2, **characterized in that** the spring is (10) connected clamping on its top side to the cap.

4. Device as claimed in claim 3, **characterized in that** the element reacting to the magnetic field is a Hall element (16).

5. Device as claimed in claim 4, **characterized in that** the Hall element is fixedly mounted on a printed circuit board which extends over all detectors located in a surface.

6. Device as claimed in claim 5, **characterized in that** a vapour-tight layer is arranged between the printed circuit board and the cap (9).

7. Device as claimed in claim 6, **characterized in that** the vapour-tight layer comprises a rigid plate (5).

8. Device as claimed in claim 7, **characterized in that** the cabinet is a closable cabinet to be opened by a key, that the articles are formed by bottles (12) and that the detectors are connected to a recording device.

## Patentansprüche

1. Vorrichtung zum Erfassen der Anwesenheit von Gegenständen in einem Gehäuse (1), umfassend:
- eine Einrichtung (14) zum Bestimmen eines Ortes für jeden der Gegenstände in dem Gehäuse; und
- einen Detektor, der an jedem Ort angeordnet ist, um die Anwesenheit eines Gegenstands an dem relevanten Ort zu erfassen, wobei der Detektor ausgelegt ist, um auf einen Versatz eines Teiles des Detektors zu reagieren, der durch die Schwerkraft bewirkt wurde,
- wobei jeder Detektor einen Magneten (11) umfaßt, sowie ein Element (16), das auf eine durch den Magneten bewirkte Änderung des magnetischen Feldes reagiert,
**dadurch gekennzeichnet, daß**
jeder Magnet an einer Feder (10) fixiert ist, die durch einen an dem Ort angeordneten Gegenstand nach unten gedrückt wird,
- daß eine Abdeckplatte (7) über dem Element platziert ist,
- daß Ausnehmungen (8) in der Abdeckplatte, an jedem der Orte, hergestellt sind, und
- daß in jeder Ausnehmung (8) eine Kappe (9) angeordnet ist, die aus einem elastischen Material hergestellt ist und die mit der Abdeckplatte verbunden ist und sich über den Magneten (11) und die Feder (10) erstreckt.

2. Vorrichtung nach Anspruch 1, **dadurch gekennzeichnet, daß** der Magnet in der Kappe (9) aufgenommen ist.

3. Vorrichtung nach Anspruch 1 oder 2, **dadurch gekennzeichnet, daß** die Feder (10) klemmend an ihrer Oberseite mit der Kappe verbunden ist.

4. Vorrichtung nach Anspruch 3, **dadurch gekennzeichnet, daß** das auf das magnetische Feld reagierende Element ein Hall-Element (16) ist.

5. Vorrichtung nach Anspruch 4, **dadurch gekennzeichnet, daß** das Hall-Element fest an einer Leiterplatte montiert ist, die über alle in einer Oberfläche angeordneten Detektoren verläuft.

6. Vorrichtung nach Anspruch 5, **dadurch gekennzeichnet, daß** eine dampfdichte Schicht zwischen der Leiterplatte und der Kappe (9) angeordnet ist.

7. Vorrichtung nach Anspruch 6, **dadurch gekennzeichnet, daß** die dampfdichte Schicht eine feste Platte (5) umfaßt.

8. Vorrichtung nach Anspruch 7, **dadurch gekennzeichnet, daß** das Gehäuse ein verschließbares Gehäuse ist, das mit Hilfe eines Schlüssels geöffnet werden kann, daß die Gegenstände durch Flaschen (12) gebildet sind und daß die Detektoren mit einer Aufzeichnungsvorrichtung verbunden sind.

## Revendications

1. Dispositif pour détecter la présence d'articles dans une armoire (1), comprenant :
- des moyens (14) pour déterminer un emplacement pour chacun des articles dans l'armoire ; et
- un détecteur agencé au niveau de chaque emplacement pour détecter la présence d'un article au niveau de l'emplacement correspondant, dans lequel le détecteur est adapté pour réagir au déplacement d'une partie du détecteur provoquée par la force de gravité,
- dans lequel chaque détecteur comprend un aimant (11) et un élément (16) réagissant à une variation du champ magnétique provoqué par l'aimant,
**caractérisé en ce que** chacun des aimants est fixé sur un ressort (10) qui est comprimé vers le bas par un article placé dans cet emplacement,
- **en ce qu'**une plaque de couverture (7) est placée au-dessus de l'élément,
- **en ce que** des évidements (8) sont réalisés dans la plaque de couverture au niveau de chacun des emplacements, et
- **en ce que** dans chaque évidement (8) est agencé un couvercle (9) qui est réalisé à partir d'un matériau flexible et qui est relié à la plaque de couverture et qui s'étend au-dessus de l'aimant (11) et du ressort (10).

2. Dispositif selon la revendication 1, **caractérisé en ce que** l'aimant est reçu dans le couvercle (9).

3. Dispositif selon la revendication 1 ou 2, **caractérisé en ce que** le ressort (10) est relié de manière serrée sur son côté supérieur au couvercle.

4. Dispositif selon la revendication 3, **caractérisé en ce que** l'élément réagissant au champ magnétique est un élément à effet Hall (16).

5. Dispositif selon la revendication 4, **caractérisé en ce que** l'élément à effet Hall est monté de manière fixe sur une carte de circuit imprimé qui s'étend au-dessus de tous les détecteurs situés sur une surface.

6. Dispositif selon la revendication 5, **caractérisé en ce qu'**une couche étanche aux vapeurs est agencée entre la carte de circuit imprimé et le couvercle (9).

7. Dispositif selon la revendication 6, **caractérisé en ce que** la couche étanche aux vapeurs comprend une plaque rigide (5).

8. Dispositif selon la revendication 7, **caractérisé en ce que** l'armoire est une armoire à fermeture à ouvrir avec une clé, **en ce que** les articles sont constitués par des bouteilles (12) et **en ce que** les détecteurs sont connectés à un dispositif d'enregistrement.
